# EUROPEAN PATENT SPECIFICATION

(11) **EP 3 479 987 B1**
(45) Date of publication and mention of the grant of the patent: **04.08.2021**
(21) Application number: 18204071.7
(22) Date of filing: 02.11.2018
(51) Int. Cl.: B29C 45/00, C08L 69/00, B29K 105/00, B29K 55/02, B29K 69/00, C08L 55/02, B29C 45/14

(54) **METHOD FOR PREPARING PLASTIC MATERIAL**
VERFAHREN ZUR HERSTELLUNG VON KUNSTSTOFFMATERIAL
PROCÉDÉ DE PRÉPARATION DE MATIÈRE PLASTIQUE

(30) Priority: 06.11.2017 CN 201711078338
(43) Date of publication of application: 08.05.2019
(73) Proprietor: GUANGDONG OPPO MOBILE TELECOMMUNICATIONS CORP., LTD., Wusha, Chang'an Dongguan, Guangdong 523860 (CN)
(72) Inventor: LI, Jing, Dongguan, Guangdong 523860 (CN); YANG, Guangming, Dongguan, Guangdong 523860 (CN)
(74) Representative: Manitz Finsterwald Patent- und Rechtsanwaltspartnerschaft mbB

(56) References cited:
- EP-A1- 3 551 697
- CN-A- 101 875 771
- CN-A- 102 649 872
- CN-A- 103 059 540
- US-A1- 2014 275 375
- US-B1- 6 462 167
- Covestro Deutschland AG: "Babyblend Range", , 1 March 2016 (2016-03-01), XP055530725, Retrieved from the Internet: URL:https://www.plastics.covestro.com/~/me dia/Product%20Center/PCS/Images/5_Library/ Product%20brochures/Bayblend/Bayblend%20br ochure.pdf?la=en&force=1 [retrieved on 2018-12-06]

## Description

### TECHNICAL FIELD

The described embodiments relate to the technical field of polymer materials, and in particular to a method for preparing a plastic material for in-mold injection molding.

### BACKGROUND

With the improvement of consumption level, consumers not only pursue diversification of functions of industrial products, but also have higher and higher requirements for appearance, texture, or the like of the industrial products. In recent years, IMT (Insert Mold Three-dimensional decoration) technology, also called as in-mold injection molding 3D decoration technology, has been widely used in surface decoration of the industrial products, such as decorative and functional control panels of home appliances, dashboard, housings or lens of mobile phones, or the like. The specific structure of one product manufactured by using the IMT technology may include a surface-hardened transparent film or sheet, an intermediate printed pattern layer, and a back injection-molded layer. Since the printed pattern layer is in the middle, it is possible to make the product have high definition, good stereoscopic effect, and anti-friction. It is also possible to prevent the surface from being scratched, and keep the color bright and not faded for a long time.

US 6462167 B1 discloses a method for producing blow moldings of essentially polycarbonate resin. The blow moldings may have a relatively high percentage of hollowness, and may have a ribbed structure, and their wall thickness is uniform. Forming ribs in the blow moldings is easy. A polycarbonate resin composition for the method is also disclosed. The polycarbonate resin composition is for gas assist injection molding and comprises (A) from 30 to 100% by weight of a polycarbonate resin and (B) from 0 to 70% by weight of a styrenic resin. The melt viscosity ratio, ηH/ηL, of the melt viscosity of the resin composition, ηH (Pa·sec), measured at a shear rate of 10 (sec⁻¹) at the optimum molding temperature to the melt viscosity thereof, ηL (Pa·sec), at a shear rate of 1000 (sec⁻¹), is at least 5. When the polycarbonate resin composition is molded into blow moldings in a mode of gas assist injection molding, the mold cavity volume is expanded while the pressure gas is still in the resin melt in the mold cavity. The blow moldings of the polycarbonate resins produced in the gas assist injection molding method are provided.

CN 101875771 A discloses an environmentally-friendly halogen-free polycarbonate/acrylonitrile butadiene styrene (PC/ABS) alloy and a preparation method thereof. The environmentally-friendly halogen-free PC/ABS alloy consists of the following components in percentage by weight: 60 to 68 percent of PC, 6 to 14 percent of ABS, 7 to 12 percent of halogen-free flame retardant, 5 to 12 percent of inorganic filler and 4 to 16 percent of auxiliary agent. The environmentally-friendly halogen-free PC/ABS alloy has the advantages of high fill fluidity, processability, high bending strength and bending modulus, little surface warpage and deformation when an in-mold decoration (IMD) process is used for decorating the surface and good application prospect in high-end laptop computer casings, automotive instrument panels and electrical appliance shells.

EP 3551697 A1 discloses a polymer composition comprising: - polycarbonate; - acrylonitrile-butadiene-styrene copolymer; and ≥ 0.001 and ≤ 0.500 wt% of a phosphate salt of zinc, sodium, calcium, potassium or magnesium, with regard to the total weight of the polymer composition. Such polymer composition demonstrates a reduction of surface defects in the form of silver streaks, whereas further demonstrating a desired balance of mechanical properties, thermal properties and processing properties.

US 2014/275375 A1 discloses an impact resistant polycarbonate composition having improved resistance to polymer degradation comprises an aromatic polycarbonate in admixture with an elastomer-modified graft copolymer that is the product of an emulsion polymerization process, wherein composition is a product of compounding the aromatic polycarbonate and the elastomer-modified graft copolymer in the presence of a buffer comprising a potassium salt of phosphoric acid.

However, the plastics material currently used for IMT injection molding and the method for preparing the plastic material have yet to be further improved.

### SUMMARY

The present invention is defined by the independent claim.

A method for preparing a plastic material is provided according to claim 1.

In some examples, before granulating the blend by means of the melt co-extrusion process, the method further comprises: baking the blend of the first resin and the second resin.

In some examples, blending the first resin with the second resin to form the blend comprises: disposing the first resin and the second resin into a blending container; stirring and blending the first resin and the second resin, such that the blend is formed; and baking the blend of the first resin and the second resin to form a blended powder.

In some examples, granulating the blend by means of the melt co-extrusion process to obtain the plastic material comprises: heating, melting, and extruding the blended powder; and cooling and cutting the extruded blended powder to form the plastic material in form of a pellet.

In some examples, the first resin has a molecular weight greater than that of the second resin.

In some examples, the second resin further comprises at least one of a flame retardant, a plasticizer, and a toughening agent.

In some examples, the first resin further comprises at least one of a flame retardant, a plasticizer, and a toughening agent.

In some examples, an impact strength of the plastic material ranges from approximately 680MPa to approximately 720MPa.

In some examples, a tensile strength of the plastic material ranges from approximately 55MPa to approximately 65MPa.

### BRIEF DESCRIPTION OF THE DRAWINGS

In order to make the technical solution described in the embodiments of the present disclosure more clear, the drawings used for the description of the embodiments will be briefly described. Apparently, the drawings described below are only for illustration but not for limitation. It should be understood that, those skilled in the art may acquire other drawings based on these drawings, without making any inventive work.
FIG. 1 is a flow chart illustrating a method for preparing the plastic material for in-mold injection molding according to some embodiments of the present disclosure.
FIG. 2 is a flow chart illustrating the block 120 in FIG. 1 according to some embodiments of the present disclosure.
FIG. 3 is a flow chart illustrating the block 130 in FIG. 1 according to some embodiments of the present disclosure.

### DETAILED DESCRIPTION

Embodiments of the present disclosure will be described in detail below, and examples of the embodiments will be illustrated in the accompanying drawings. The embodiments described below with reference to the drawings are illustrative and are intended to explain the present disclosure, and cannot be construed as a limitation to the present disclosure.

In the description of the present disclosure, it should be understood that, terms such as "first", "second", or the like are used herein for purposes of description, and are not intended to indicate or imply relative importance or significance or to imply the number of indicated technical features. Thus, the feature defined with "first", "second", or the like may include one or more of such a feature. In the description of the present disclosure, "multiple" means two or more, such as two, three, or the like, unless specified otherwise.

In the present disclosure, unless specified or limited, otherwise, terms "mounted", "connected", "coupled", "disposed", "arranged", or the like are used in a broad sense, and may include, for example, fixed connections, detachable connections, or integral connections; may also be mechanical or electrical connections; may also be direct connections or indirect connections via intervening structures; may also be inner communications of two elements, as can be understood by those skilled in the art depending on specific contexts.

In addition, a numerical range represented by "-" in this specification refers to the range which includes two numerical values respectively recited before and after "-", and respectively used as a minimum value and a maximum value. In the drawings, components having similar or identical structures are denoted by the same reference numerals.

For better understanding, the in-mold injection molding process may be briefly described in the following.

The in-mold injection molding process is in fact a new technology combining screen printing and injection molding. Firstly, the screen printing may be performed on a transparent sheet (material to be printed), such that images may be transferred to the sheet. After that, a surface of the transparent sheet may be molded. Finally, the printed and molded decorative sheet may be disposed in an injection mold, and a resin may be injected on the back of the sheet, such that the resin and the sheet may be joined together to form an IMT product. The IMT product may include a sheet, an ink layer, and an injection-molded layer. In general, a common sheet may be made of PET (Polyethylene Terephthalate) or the like. However, since the sheet and the ink layer are not resistant to high temperatures, the plastic material used for the IMT injection-molded layer should have a low melting temperature and a high fluidity.

At present, for a plastic product manufactured by means of the IMT injection molding process, problems may be generally present during the injection molding process; the problems may include but be not limited to, the plastic material for injection molding having a large impact on temperatures of the sheet and the ink, the sheet being easily deformed, the ink being flushed, or the like). The above problems are caused by the poor toughness of the plastic material used in the IMT injection molding process. It is because that, the plastic material currently used in the IMT injection molding on the market is PC (Polycarbonate), or a blending of the PC and the ABS. Although the plastic material of these types may have a good fluidity at a low temperature and meet the requirements of the IMT injection molding process, however, the plastic material has a poor toughness. If a plastic material can be designed to not only meet the requirements of the IMT injection molding process, but also improve the toughness of the plastic product, the performance of the plastic product manufactured by means of the IMT injection molding may be greatly improved.

According to the present disclosure, the plastic material includes PC, and a melt index of the plastic material is less than 28g/10min. In this way, on one hand, the plastic material may have a lower melting temperature and a better fluidity, such that the plastic material may meet the requirements of the IMT injection molding process. On the other hand, when the plastic material of this type is used to perform the injection on the surface of the sheet, particularly the surface of the sheet on which the ink layer is printed, problems, such as the deformation of the sheet and the flushing of the ink in the ink layer may be alleviated.

It should be noted that, chemical compositions of the plastic material described above may not limited, as long as the requirements of the in-mold injection molding process can be met, and the melt index of the plastic material falls into the range described above. Those skilled in the art may select the chemical compositions of the plastic material based on the specific application environment of the plastic material. For example, the plastic material may also include PMMA (Polymethyl Methacrylate), PET (Polyethylene Terephthalate), PS (Polystyrene), or the like, in order to meet the requirements for configurations of components, such as housings of mobile phone, household appliance panels, or the like.

According to some embodiments of the present disclosure, for example, the plastic material used for manufacturing a housing of a mobile terminal such as a mobile phone may include PC. In this way, the product manufactured by means of the in-mold injection molding process may meet the requirements for the housing of the mobile terminal. According to some embodiments of the present disclosure, the plastic material may have a melt index ranging from approximately 18g/10min to approximately 28g/10min. In this way, when using the plastic material in the in-mold injection molding process, the plastic material may have a better fluidity and a better toughness. Therefore, the plastic material according to some embodiments of the present disclosure can be used to manufacture a product having a large radius of curvature or a complicated structure by means of the in-mold injection molding process.

It should be noted that, the term "melt index" may be obtained by using a testing method familiar to those skilled in the art. Specifically, in some embodiments, the test method may include the following processes. Firstly, the plastic material in form of a pellet may be melted into plastic fluid at a preset temperature and a preset pressure (the temperature and pressure may be varied based on different materials, and those skilled in the art may choose the temperature and pressure as required) in a preset period of time (according to some embodiments of the present disclosure, for example, the period of time may be 10 minutes). And then, the amount of the plastic fluid in grams (g) that flows out via a circular tube having a diameter of approximately 2.095mm may be tested. The amount of the plastic fluid in the preset period of time may be the melt index of the plastic material. In some embodiments, the greater the value of the melt index, the better the fluidity of the plastic material during the injection molding process; however, when the value of the melt index is less, the fluidity of the plastic material is worse. Therefore, according to some embodiments of the present disclosure, it is required that the plastic material for the IMT injection-molded layer has a good fluidity, that is, a great melt index.

The plastic material includes a first resin and a second resin. The plastic material is formed from the first resin and the second resin by means of, for example, a melt co-extrusion process. The second resin may be used to enhance the toughness of the first resin, such that the plastic material formed by the first resin and the second resin may have a good toughness.

According to some embodiments, a molecular weight of the first resin may be greater than a molecular weight of the second resin. Herein, it should be understood that, terms such as "molecular weight of the first resin", "molecular weight of the second resin", and the like may refer to the molecular weight of a main polymer constituting the corresponding resin. For example, when the first resin or the second resin is a blend of two or more polymers, the term "molecular weight of the first resin" or "molecular weight of the second resin" may refer to the molecular weight of the polymer that has a mass of at least 50% of the total mass of the corresponding resin. It should be noted that, the term "polymer" should be understood broadly to include both a polymer formed from a single monomer and a copolymer formed from multiple monomers.

According to the present disclosure, the composition of the first resin and that of the second resin, a blending ratio of the first resin to the second resin is greater than 1:1 and the melt index of the plastic material is less than 28g/10min.

Therefore, the proportion of the first resin having a greater molecular weight and the proportion of the second resin having a less molecular weight can be adjusted based on the chemical composition of the first resin and that of the second resin, so that the melt index of the formed plastic material may meet the requirements of the in-mold injection molding process. Other physicochemical properties of the resins may have less effect on the melt index of the finally formed plastic material. Therefore, it is only necessary to make the molecular weight of the main component in the first resin different from the molecular weight of the main component in the second resin, that is, adjust the blending ratio of the first resin to the second resin, to obtain the plastic material having the melt index meeting the requirement.

According to the present disclosure, a mass ratio of the first resin to the second resin is greater than 1:1, based on the total mass of the plastic material. That is to say, in the plastic material, the mass of the first resin is greater than the mass of the second resin. When the mass ratio is too large, it means that the plastic material includes too much first resin; in this case, the plastic material may have a poor toughness, and it is difficult to ensure that the sheet or the ink layer will not be impacted during the in-mold injection molding process. However, when the mass ratio is too small, it means that the plastic material includes too much second resin; in this case, the plastic material may be too fluid, such that it is impossible to form an injection-molded product having a complicated structure by means of the in-mold injection molding technique when using the plastic material of this type. However, when the mass ratio of the first resin to the second resin is greater than 1:1, the toughness of the plastic material may be improved, and the other properties, such as hardness, mechanical strength, or the like of the plastic material can be ensured.

According to the present disclosure, the first resin and the second resin include PC.

More specifically, according to the present disclosure, the first resin is a blend of PC and ABS. The blend of PC and ABS may have a low melting temperature and a high fluidity, which can meet the requirements of the IMT injection molding process. According the present disclosure, the second resin also includes a PC, and a molecular weight of the PC in the second resin may range from approximately 20,000 to approximately 50,000. When the molecular weight of the PC in the second resin ranges from approximately 20,000 to approximately 50,000, the plastic material obtained by blending the first resin with the second resin may have a good toughness, and may be suitable for forming the housing of the mobile terminal by means of the in-mold injection molding process. According to the present disclosure, the molecular weight of the PC in the first resin is greater than the molecular weight of the PC in the second resin. In this way, after the second resin including the PC having a less molecular weight is blended with the first resin including the PC having a greater molecular weight, the toughness of the first resin may be adjusted, so that the plastic material formed by the first resin and the second resin may have a good toughness, a good fluidity and a strong mechanical strength.

According to some embodiments of the present disclosure, the first resin may further include at least one of a flame retardant, a plasticizer, and a toughening agent. Likewise, the second resin may further include at least one of a flame retardant, a plasticizer, and a toughening agent.

Herein, the flame retardant may refer to a chemical additive used to improve a combustion performance of combustible and flammable materials. The material added with the flame retardant may effectively prevent, delay or terminate the spread of the flame when the material is attacked by external fire sources, in order to achieve the flame retardant function. According to some embodiments of the present disclosure, by adding a flame retardant to the first resin and/or the second resin, the flame retardant property of the plastic material may be improved. According to some embodiments of the present disclosure, the type and the content of the flame retardant may not be limited, and those skilled in the art may select the type and the content of the flame retardant as required.

Herein, the plasticizer may be a kind of polymer material additive. Adding the plasticizer during the processing of the plastic material may enhance the flexibility of the plastic material, and thus the plastic material may be easy to process. According to some embodiments of the present disclosure, the flexibility of the plastic material may be improved by adding the plasticizer to the first resin and/or the second resin. According to some embodiment of the present disclosure, the type and the content of the plasticizer may not be limited, and those skilled in the art may select the type and the content of the plasticizer as required.

According to some embodiments, the toughening agent may refer to the material capable of increasing the toughness and reducing the brittleness. According to some embodiments of the present disclosure, by adding the toughening agent to the first resin and/or the second resin, the toughness of the plastic material may be improved. According to some embodiments of the present disclosure, the type and the content of the toughening agent may not be limited, and those skilled in the art may select the type and the content of the toughening agent as required.

According to some embodiments of the present disclosure, the plastic material may be in form of a granular particle or a pellet, and a length of each granular particle or each pellet may not be limited. Those skilled in the art may select the length of each granular particle or each pellet as required.

According to some embodiments of the present disclosure, an impact strength of the plastic material may range from approximately 680MPa to approximately 720MPa. In this way, when the plastic material has such an impact strength, the effect of injection molding may be improved, and the performance of the plastic product may be further improved.

Further, according to some embodiments of the present disclosure, a tensile strength of the plastic material may range from approximately 55MPa to approximately 65MPa. In this way, when the plastic material has such a tensile strength, the effect of injection molding may be improved, and the performance of the plastic product may be further improved.

In another aspect of the present disclosure, a plastic product may be further provided. Herein, the plastic product may include, but be not limited to a decorative and functional control panel of a home appliance, an automotive instrument panel, a housing or a lens of a mobile terminal such as a mobile phone, a tablet computer, a laptop, or the like.

The plastic product may include the plastic material as previously described, and thus the specific configuration of the plastic material may not be descried in detail any more. More specifically, the plastic product may be formed from the plastic material by means of the in-mold injection molding process. Of course, it is also possible that the plastic product may be formed from the plastic material by means of such as extrusion molding, compression molding, blow molding, or the like. Therefore, the forming method for the plastic product may not be limited in the present disclosure.

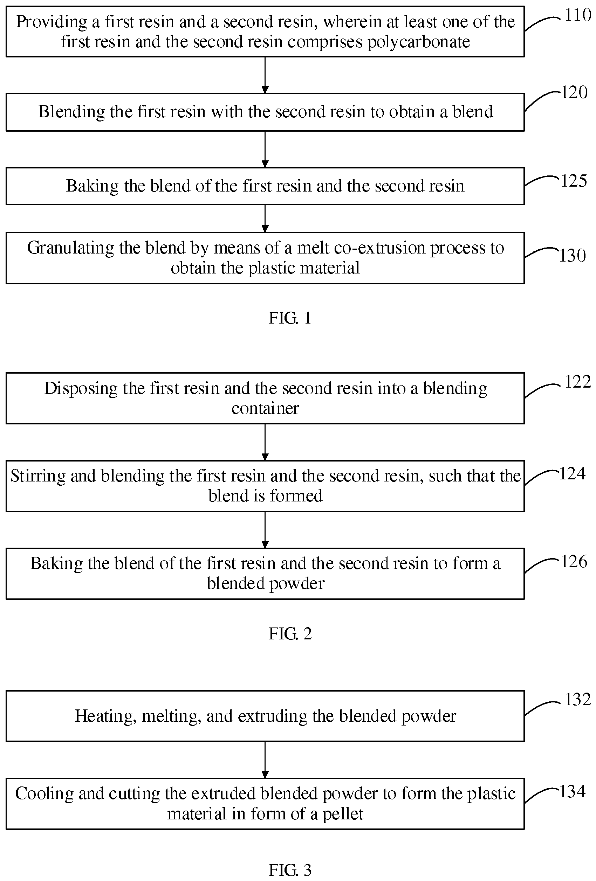

In a further aspect of the present disclosure, a method for preparing the plastic material previous described may be further provided. As described above, the plastic material has a melt index less than 28g/10min. Referring to FIG. 1, the method in this embodiment may include actions or operations at the following blocks illustrated in FIG. 1.

At block 110: a first resin and a second resin may be provided. According to some embodiments, at least one of the first resin and the second resin may include PC. For example, the first resin may be a blend of PC and ABS, and the second resin may include the PC. A molecular weight of the first resin may be greater than a molecular weight of the second resin.

At block 120: the first resin may be blended with the second resin, in order to obtain a blend of the first resin and the second resin.

According to some embodiments, a blending ratio of the first resin to the second resin may not be limited in the present disclosure, and those skilled in the art can select the blending ratio as required. According to some embodiments of the present disclosure, the first resin and the second resin may have all features and advantages of the first resin and the second resin described above, and will not be described in detail any more.

At block 130: the blend of the first resin and the second resin may be granulated by means of a melt co-extrusion process, in order to obtain the plastic material.

At the block 130, after the first resin and the second resin are blended with each other, the blend of the first resin and the second resin may be granulated by means of the melt co-extrusion process, and thus the plastic material may be formed. More specifically, according to some embodiments of the present disclosure, after the first resin and the second resin are blended with each other, the blend may be disposed in a mold, and stirred, blended, and further heated in the mold. When the temperature of the blend reaches the melting temperature, the first resin and the second resin may melt, and may be extruded from the mold via a die having a preset diameter to obtain the previously described plastic material. According to some embodiments of the present disclosure, the melt co-extrusion process may be performed at a preset temperature determined based on the specific composition of the first resin and that of the second resin. Therefore, it is possible to ensure that both the first resin and the second resin may enter a molten state. It will be appreciate to avoid an excessive temperature which may affect the physical and chemical properties of the first resin and the second resin. In this way, the plastic material formed by the first resin and the second resin can be conveniently obtained.

In the embodiments described above, the first resin and the second resin are disposed in the mold after blending. However, it will be appreciated that, the first resin and the second resin may be disposed in the mold before the blending; that is to say, the blending and the granulating of the first resin and the second resin may be all completed in the mold.

According to some embodiments of the present disclosure, in order to further improve the quality of the plastic material prepared by the method previously described, before the block 130, the method may further include the block 125: the blend of the first resin and the second resin may be baked.

According to some embodiments of the present disclosure, after the first resin and the second resin are blended in a preset ratio, the first resin and the second resin may be stirred and uniformly blended. After that, the blend of the first resin and the second resin may be baked and heated. In this case, since the first resin and the second resin may be preheated, it is possible to facilitate the melting of the first resin and the second resin in subsequent blocks.

FIG. 2 illustrates the flow chart of the block 120. According to some embodiments of the present disclosure, referring to FIG. 2, the block 120 may further include the following blocks.

At block 122: the first resin and the second resin may be disposed into a blending container.

As previously described, the blending ratio of the first resin to the second resin may not be limited in the present disclosure, and those skilled in the art can select the blending ratio as required. According to some embodiments of the present disclosure, the first resin and the second resin may have all features and advantages of the first resin and the second resin described above, and will not be described in detail any more.

At block 124: the first resin and the second resin may be further stirred and blended, such that the blend of the first resin and the second resin may be formed.

At the block 124, the first resin and second resin may be stirred and blended evenly in the blending container, in order to form the blend of the first resin and the second resin. According to some embodiments of the present disclosure, the first resin and the second resin may be stirred and blended by a stirring device along a stirring direction in the blending container. The stirring device may be a mechanical stirrer, a rocking autoclave, and the like. The stirring direction may not be limited here. For example, the first resin and the second resin may be stirred clockwise, anticlockwise, or the like.

At block 126: the blend of the first resin and the second resin may be baked to form a blended powder.

According to some embodiments, the first resin and the second resin may be baked at a preset temperature, such that the first resin and the second resin may be preheated to facilitate melting of the first resin and the second resin in subsequent blocks.

FIG. 3 illustrates the flow chart of the block 130. According to some embodiments of the present disclosure, referring to FIG. 3, the block 130 may further include the following blocks.

At block 132: the blended powder may be heated, melted, and extruded.

According to some embodiments, after being baked, the blended powder may be disposed in a mold, and heated, melted, and extruded in the mold. More specifically, according to some embodiments, the blended powder may be heated. When the temperature of the blend powder reaches the melting temperature, the first resin and the second resin may be melted into liquid, and may be extruded from the mold via the die having the preset diameter to obtain the previously described plastic material. According to some embodiments of the present disclosure, the melt co-extrusion process may be performed at the preset temperature determined based on the specific composition of the first resin and that of the second resin, and thus the preset temperature may not be limited in the present disclosure. In this way, it is possible to facilitate the melting and even blending of the first resin and the second resin.

In the embodiments described above, the first resin and the second resin are disposed in the mold after blending. However, it will be appreciated that, the first resin and the second resin may be disposed in the mold before the blending; that is to say, the blending and the granulating of the first resin and the second resin may be all completed in the mold.

At block 134: the extruded blended powder may be cooled and cut, in order to form the plastic material in form of a pellet.

According to some embodiments, when the extruded mixed powder has a certain length, the blended powder may be cut, and thus the plastic mater in form of a pellet may be achieved. According to some embodiments of the present disclosure, the blended powder may be extruded via the die having the preset diameter. After the extruded powder passes through a cooling section having a preset length, the extruded powder may be cut into the pellets of equal length by using a cutting die. In this way, the pellets of equal length may be better used in the IMT injection molding process to manufacture a plastic product, which in turn may further improve the performance of the plastic product.

According to some embodiments of the present disclosure, by using the method previously described, it may be convenient to obtain the plastic material previously described, and the production cost may be reduced.

In the description of the present disclosure, it is to be understood that terms such as "upper", "lower", "front", "rear", "left", "right", "top", "bottom", "inner", "outer", and the like, refer to the orientations and locational relations illustrated in the accompanying drawings. Thus, these terms used here are only for describing the present disclosure and for describing in a simple manner, and are not intended to indicate or imply that the device or the elements are disposed to locate at the specific directions or are structured and performed in the specific directions, which could not to be understood as limiting the present disclosure.

Reference throughout this specification, the reference terms "an embodiment", "some embodiments", "one embodiment", "another example", "an example", "a specific example", or "some examples", or the like means that a specific feature, structure, material, or characteristic described in connection with the embodiment or example is included in at least one embodiment or example of the present disclosure. Thus, the illustrative descriptions of the terms throughout this specification are not necessarily referring to the same embodiment or example of the present disclosure.

Therefore, at any point, the embodiments should be regarded as exemplary and unrestrictive, and the scope of the present application is defined by the appended claims, rather than the above description. Therefore, all changes within the meaning and scope of the claim is intended to be included. Any appended label recited in the claims shall not be regarded as a limitation to the claims. In addition, apparently, the terms "include", "comprise" or the like do not exclude other units or steps, and the singular does not exclude plural.

## Claims

1. A method for preparing a plastic material, comprising providing (110) a first resin and a second resin;
blending (120) the first resin with the second resin to obtain a blend; and granulating (130) the blend by means of a melt co-extrusion process to obtain the plastic material;
wherein a melt index of the plastic material is less than 28g/10min; **characterized in that** the first resin is a blend of polycarbonate and acrylonitrile-butadiene-styrene copolymer, while the second resin comprises a polycarbonate having a molecular weight ranging from approximately 20,000 to approximately 50,000; the polycarbonate in the first resin has a molecular weight greater than the polycarbonate in the second resin, and a mass ratio of the first resin to the second resin is greater than 1:1.

2. The method of claim 1, before granulating the blend by means of the melt co-extrusion process, further comprising:
baking (125) the blend of the first resin and the second resin.

3. The method of any one of claim 1-2, wherein blending the first resin with the second resin to form the blend comprises:
disposing (122) the first resin and the second resin into a blending container;
stirring and blending (124) the first resin and the second resin, such that the blend is formed; and
baking (126) the blend of the first resin and the second resin to form a blended powder.

4. The method of any one of claims 1-3, wherein granulating the blend by means of the melt co-extrusion process to obtain the plastic material comprises:
heating, melting, and extruding (132) the blended powder; and
cooling and cutting (134) the extruded blended powder to form the plastic material in form of a pellet.

5. The method of any one of claims 1-4, wherein the first resin has a molecular weight greater than that of the second resin.

6. The method of any one of claims 1-5, wherein the second resin further comprises at least one of a flame retardant, a plasticizer, and a toughening agent.

7. The method of any one of claims 1-6, wherein the first resin further comprises at least one of a flame retardant, a plasticizer, and a toughening agent.

8. The method of any one of claims 1-7, wherein an impact strength of the plastic material ranges from approximately 680MPa to approximately 720MPa.

9. The method of any one of claims 1-8, wherein a tensile strength of the plastic material ranges from approximately 55MPa to approximately 65MPa.

## Patentansprüche

1. Verfahren zur Herstellung eines Kunststoffmaterials, umfassend
Bereitstellen (110) eines ersten Harzes und eines zweiten Harzes;
Mischen (120) des ersten Harzes mit dem zweiten Harz, um eine Mischung zu erhalten; und
Granulieren (130) der Mischung mittels eines Schmelz-Coextrusionsverfahrens, um das Kunststoffmaterial zu erhalten;
wobei ein Schmelzindex des Kunststoffmaterials weniger als 28 g/10 min beträgt;
**dadurch gekennzeichnet, dass** das erste Harz eine Mischung aus Polycarbonat und Acrylnitril-Butadien-StyrolCopolymer ist, während das zweite Harz Polycarbonat mit einem Molekulargewicht im Bereich von etwa 20.000 bis etwa 50.000 umfasst; das Polycarbonat in dem ersten Harz ein größeres Molekulargewicht als das Polycarbonat in dem zweiten Harz aufweist, und ein Massenverhältnis des ersten Harzes zu dem zweiten Harz größer als 1:1 ist.

2. Verfahren nach Anspruch 1, das vor dem Granulieren der Mischung mittels des Schmelz-Coextrusionsverfahrens weiterhin umfasst:
Brennen (125) der Mischung aus dem ersten Harz und dem zweiten Harz.

3. Verfahren nach einem der Ansprüche 1 bis 2, wobei das Mischen des ersten Harzes mit dem zweiten Harz zum Bilden der Mischung umfasst:
Anordnen (122) des ersten Harzes und des zweiten Harzes in einem Mischbehälter;
Rühren und Mischen (124) des ersten Harzes und des zweiten Harzes, so dass die Mischung gebildet wird; und
Brennen (126) der Mischung aus dem ersten Harz und dem zweiten Harz, um ein gemischtes Pulver zu bilden.

4. Verfahren nach einem der Ansprüche 1 bis 3, wobei das Granulieren der Mischung mittels des Schmelz-Coextrusionsverfahrens zur Gewinnung des Kunststoffmaterials umfasst:
Erhitzen, Schmelzen und Extrudieren (132) des gemischten Pulvers; und
Kühlen und Schneiden (134) des extrudierten gemischten Pulvers, um das Kunststoffmaterial in Form eines Pellets zu bilden.

5. Verfahren nach einem der Ansprüche 1-4, wobei das erste Harz ein größeres Molekulargewicht als das zweite Harz aufweist.

6. Verfahren nach einem der Ansprüche 1 bis 5, wobei das zweite Harz weiterhin ein Flammschutzmittel, einen Weichmacher und/oder einen Zähigkeitsvermittler umfasst.

7. Verfahren nach einem der Ansprüche 1 bis 6, wobei das erste Harz weiterhin ein Flammschutzmittel, einen Weichmacher und/oder einen Zähigkeitsvermittler umfasst.

8. Verfahren nach einem der Ansprüche 1-7, wobei die Schlagzähigkeit des Kunststoffmaterials im Bereich von etwa 680 MPa bis etwa 720 MPa liegt.

9. Verfahren nach einem der Ansprüche 1-8, wobei die Zugfestigkeit des Kunststoffmaterials im Bereich von etwa 55 MPa bis etwa 65 MPa liegt.

## Revendications

1. Procédé pour la préparation d'un matériau plastique, comprenant :
la mise à disposition (110) d'une première résine et d'une deuxième résine ;
le mélange (120) de la première résine avec la deuxième résine pour obtenir un mélange ; et
la granulation (130) du mélange au moyen d'un procédé de co-extrusion à l'état fondu pour obtenir le matériau plastique ;
un indice de fluidité à chaud du matériau plastique étant inférieur à 28 g/10 min ;
**caractérisé en ce que**
la première résine est un mélange de polycarbonate et de copolymère d'acrylonitrile-butadiène-styrène, alors que la deuxième résine comprend un polycarbonate possédant un poids moléculaire dans la plage d'environ 20 000 à environ 50 000 ; le polycarbonate dans la première résine possède un poids moléculaire supérieur au polycarbonate dans la deuxième résine, et un rapport en masse de la première résine sur la deuxième résine est supérieur à 1 : 1.

2. Procédé selon la revendication 1, comprenant en outre, avant la granulation du mélange au moyen du procédé de co-extrusion à l'état fondu :
la cuisson (125) du mélange de la première résine et de la deuxième résine.

3. Procédé selon l'une quelconque des revendications 1 et 2, le mélange de la première résine avec la deuxième résine pour former le mélange comprenant :
le placement (122) de la première résine et de la deuxième résine dans un récipient de mélange ;
l'agitation et le mélange (124) de la première résine et de la deuxième résine, de sorte que le mélange soit formé ; et
la cuisson (126) du mélange de la première résine et de la deuxième résine pour former une poudre mélangée.

4. Procédé selon l'une quelconque des revendications 1 à 3, la granulation du mélange au moyen du procédé de co-extrusion à l'état fondu pour obtenir le matériau plastique comprenant :
le chauffage, la fusion, et l'extrusion (132) de la poudre mélangée ; et
le refroidissement et la découpe (134) de la poudre mélangée extrudée pour mettre en forme le matériau plastique sous forme d'une pastille.

5. Procédé selon l'une quelconque des revendications 1 à 4, la première résine possédant un poids moléculaire supérieur à celui de la deuxième résine.

6. Procédé selon l'une quelconque des revendications 1 à 5, la deuxième résine comprenant en outre au moins l'un parmi un retardateur de flamme, un plastifiant, et un agent de durcissement.

7. Procédé selon l'une quelconque des revendications 1 à 6, la première résine comprenant en outre au moins l'un parmi un retardateur de flamme, un plastifiant, et un agent de durcissement.

8. Procédé selon l'une quelconque des revendications 1 à 7, une résistance aux chocs du matériau plastique se situant dans la plage d'environ 680 MPa à environ 720 MPa.

9. Procédé selon l'une quelconque des revendications 1 à 8, une résistance à la traction du matériau plastique se situant dans la plage d'environ 55 MPa à environ 65 MPa.
